# EUROPÄISCHE PATENTSCHRIFT

(11) **EP 4 347 676 B1**
(45) Veröffentlichungstag und Bekanntmachung des Hinweises auf die Patenterteilung: **28.05.2025**
(21) Anmeldenummer: 21731414.5
(22) Anmeldetag: 31.05.2021
(51) Int. Cl.: C08G 2/10, C08G 2/24

(54) **FLÜSSIGE MONOFUNKTIONELLE 1,3-DIOXOLAN COPOLYMERE**
LIQUID MONOFUNCTIONAL 1,3 DIOXOLAN COPOLYMERS
COPOLYMÈRES DE 1,3-DIOXOLANE MONOFONCTIONNELS LIQUIDES

(43) Veröffentlichungstag der Anmeldung: 10.04.2024
(73) Patentinhaber: Wacker Chemie AG, 81671 München (DE)
(72) Erfinder: DELLERMANN, Theresa, 81371 München (DE); ASCHERL, Laura, 82140 Olching (DE); BAUMANN, Martina, 82054 Sauerlach (DE)
(86) Internationale Anmeldenummer: PCT/EP2021/064570
(87) Internationale Veröffentlichungsnummer: WO 2022/253406

(56) Entgegenhaltungen:
- JP-A- H0 859 817
- GOULART G ET AL: "Synthesis and electrochemical characterization of new polymer electrolytes based on dioxolane homo and co-polymers", ELECTROCHIMICA ACTA, ELSEVIER, AMSTERDAM, NL, vol. 37, no. 9, 1 January 1992 (1992-01-01), pages 1589 - 1592, XP026516888, ISSN: 0013-4686, [retrieved on 19920101], DOI: 10.1016/0013-4686(92)80117-5

## Beschreibung

Die Erfindung betrifft monofunktionelle 1,3-Dioxolan Copolymere aus 1,3-Dioxolan und alkylsubstituiertem 1,3-Dioxolan sowie ein Verfahren zu deren Herstellung.

Der gravierende Beitrag von vermehrtem CO₂-Ausstoß zum Klimawandel ist unumstritten, und nicht erst seit der Unterzeichnung des Pariser Klimaabkommens ist die Reduktion von CO₂-Emissionen eine wichtige Stellschraube, um den Anstieg der globalen Durchschnittstemperatur zu stoppen.

Auch in der Produktion von Kunststoffen werden nicht unwesentliche Mengen an CO₂ in die Atmosphäre emittiert, laut Hochrechnungen des EIT Climate KIC sollen 2050 alleine 15 - 20 % des weltweiten CO₂-Ausstoßes auf die Produktion von Kunststoffen zurückzuführen sein. Eine Möglichkeit, um diesem Trend entgegenzuwirken, ist die Nutzbarmachung von CO₂ in der Kunststoffproduktion, und CO₂ nicht als Abfall, sondern als Ausgangsmaterial in die Wertschöpfungskette zu integrieren. Polyacetale stellen in diesem Kontext eine attraktive Kunststoffklasse dar, die über die Zwischenstufe zyklischer Acetale unter anderem durch katalytische Fixierung von CO₂ mit grünem Wasserstoff erzeugt werden können.

Klassische Polyacetale, auch genannt Polyoxymethylene (POM), wie sie beispielsweise durch Polymerisation von Formaldehyd oder Trioxan (POM-H) oder durch Ringöffnungspolymerisation von 1,3-Dioxolan (POM-C) erhalten werden können, sind jedoch bei Raumtemperatur fest, da die Polymere kristalline Teilbereiche und einen damit verbundenen Schmelzpunkt aufweisen, was je nach Anwendung eine Weiterverarbeitung erschwert. Die Möglichkeit, flüssige Vertreter dieser Materialklasse darstellen zu können, würde den Anwendungsbereich der Polyacetale deutlich erweitern.

Klassische Polyoxymethylene werden bei der Synthese durch Alkylgruppen abgestoppert. Dies führt zur Stabilisierung der Polymere, gleichzeitig wird jedoch auch eine Funktionalisierung oder Weiterreaktion unterbunden.

Die Ausstattung der Polymere mit weiteren funktionalen Gruppen, die polymeranaloge Reaktionen am Polyacetal möglich machen, würde ebenfalls das Anwendungsspektrum der Materialien erweitern, da diese durch einfache organische Reaktionen zu attraktiven Hybridmaterialien transformiert werden könnten. Für die Darstellung dieser Hybridmaterialien erweisen sich besonders monofunktionale Polymere als vorteilhaft, da diese nicht zu vernetzendem Verhalten neigen.

Lutz et al. beschreiben in "One-Step Synthesis of Bis-Macromonomers of Poly(1,3-dioxolane) Catalyzed by Maghnite-H+" J. Appl. Polym. Sci., Vol. 99, 3147-3152 (2006) die Darstellung von α,ω-bisfunktionalen Polydioxolanen durch säurekatalysierte Ringöffnungspolymerisation von 1,3-Dioxolan in Anwesenheit von Methacrylsäureanhydrid. Durch diese Methode können jedoch weder monofunktionale noch flüssige Produkte erhalten werden.

Eine ähnliche Synthese wird auch von Goethals et al. "Polymer Networks Based on α,ω-Methacrylate-Terminated Poly(l,3-dioxolane)" Polym. Int., Vol. 38, 89-94 (1995) beschrieben. Hierbei fungiert Methylene-bis(oxyethylmethacrylat) bei der Initiierung und Kettenterminierung einer säurekatalysierten Ringöffnungspolymerisation von 1,3-Dioxolan, wodurch bisfunktionales, α,ω-methacrylatterminiertes, festes Polydioxolan resultiert.

WO14095971 A2 beschreibt die Polymerisation von Trioxan sowie zyklischen Acetalen ausgehend von bifunktionalen Polyolen, wobei die terminalen OH-Gruppen des Polyacetals nachträglich mittels Glutarsäureanhydrid zu carbonsäureterminierten Polymeren abgestoppert werden. Es werden feste Produkte erhalten.

Aufgabe der vorliegenden Erfindung war es daher, über einen weiten Temperaturbereich flüssige, monofunktionale Polyacetale zu erhalten, welche aus zyklischen Acetalen realisierbar sind.

Gegenstand der Erfindung sind 1,3-Dioxolan Copolymere der allgemeinen Formel I

H- [O-CH₂-O-CH₂-CH₂-]ₓ₁ [O-CH₂-CH₂O-CH₂-]ₓ₂ [O-CH₂-O-CHR¹-CHR²-]_{y1} [O-CHR¹-CHR²O-CH₂-]_{y2} O**R³** (I),

in der
**x1+x2** Werte von 10 bis 2000 bedeuten,
**R¹** und **R²** Wasserstoffreste oder C₁- bis C₁₈-Alkylrest bedeuten,
wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3_{*}(x1+x2+y1+y2)/100 bis 50_{*}(x1+x2+y1+y2)/100 bedeutet,
**R³** einen unsubstituierten oder durch Halogenatome,
Aminogruppen, C₁₋₆-Alkyl-, C₁₋₆-Alkoxy- oder Silylgruppen substituierten aliphatisch gesättigten oder ungesättigten Kohlenwasserstoffrest mit 1 bis 100 Kohlenstoffatomen bedeutet,
in dem eine oder mehrere, einander nicht benachbarte -CH₂-Einheiten durch Gruppen -O-, -S-, C=O, -O-C(O)-, oder -NR⁴-ersetzt sein können und in denen eine oder mehrere, einander nicht benachbarte =CH-Einheiten durch Gruppen -N= ersetzt sein können und
**R⁴** einen Wasserstoffrest oder C₁- bis C₁₈-Alkylrest bedeutet.

Die 1,3-Dioxolan Copolymere der allgemeinen Formel I sind Polyacetale.

Durch den gezielten Einbau von Störstellen in Form von Alkylgruppen, welche aus dem Polymerrückgrat der 1,3-Dioxolan Copolymere der allgemeinen Formel I ragen, wird die Kristallinität des Polyacetals aufgehoben, nicht nur heruntergesetzt. Ein solches amorphes Verhalten lässt sich über dynamische Differenzkaloriemetriemessungen nachweisen, wenn nur ein Glasübergangspunkt, aber kein Schmelzpunkt vorliegt.

Die Copolymere sind aus 1,3-Dioxolan und an der 4-Position und /oder 5-Position substituiertem 1,3-Dioxolan aufgebaut. Sie sind über einen weiten Temperaturbereich flüssig und deshalb sehr gut geeignet, um weiter verarbeitet zu werden.

Sie weisen bevorzugt einen Glasübergang zwischen -50°C und - 70°C auf und haben insbesondere bevorzugt keinen Schmelzpunkt. Die Copolymere weisen einen Zersetzungsbeginn >100°C, insbesondere >110°C auf.

Die 1,3-Dioxolan Copolymere weisen die Einheiten [O-CH₂-O-CH₂-CH₂-]ₓ₁, [O-CH₂-CH₂O-CH₂-]ₓ₂, [O-CH₂-O-CHR¹-CHR²-]_{y1}, [O-CHR¹-CHR²O-CH₂-]_{y2}, statistisch oder in Blöcken auf.

Vorzugsweise bedeuten **x1+x2** Werte von 20 bis 1000, besonders bevorzugt von 30 bis 500, insbesondere von 50 bis 300.

Beispiele für Alkylreste **R¹, R²** und **R⁴** sind lineare und verzweigte Alkylreste, wie der Methyl-, Ethyl-, i-Octyl, n-Octylrest und Cycloalkylreste, wie der Cyclohexylrest. Vorzugsweise bedeuten **R¹, R²** und **R⁴** unabhängig voneinander Wasserstoffreste oder C₁- bis C₆-Alkylreste, besonders bevorzugt Wasserstoffreste, Methyl- Ethyl-, n-Propyl- oder i-Propylreste.

Vorzugsweise bedeutet jeweils nur ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest.

**R³** weist vorzugsweise 1 bis 30, insbesondere 1 bis 18 Kohlenstoffatome auf.

Beispiele für **R³,** die einen aliphatisch gesättigten Kohlenwasserstoffrest bedeuten, sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl- , Anthryl- und Phenanthrylrest; Alkarylreste, wie der o-, mund p-Tolyl-, Xylyl-, Mesitylenyl- und o-, m- und p-Ethylphenylrest; und Alkarylreste, wie der Benzylrest, der α-und der β-Phenylethylrest. In einer bevorzugten Ausführungsform weist **R³** einen Alkylrest mit 1 bis 18 Kohlenstoffatomen auf.

Beispiele für **R³,** die einen aliphatisch ungesättigten Kohlenwasserstoffrest bedeuten, sind Alkenylreste und Alkinylreste in dem eine oder mehrere, einander nicht benachbarte -CH₂-Einheiten durch Gruppen -O- oder -O-C(O)-ersetzt sein können. Bevorzugte Alkenylreste **R³** weisen 2 bis 10 Kohlenstoffatome auf, wie Vinyl, Allyloxyethyl, Propylmethacrylat, Butylmethacrylat, Methallyl, 1-Propenyl, 5-Hexenyl, Ethinyl, Butadienyl, Hexadienyl, Cyclopentenyl, Cyclopentadienyl, Cyclohexenyl, Acrylat und Methacrylat, besonders bevorzugt sind Vinyl, Allyl, Acrylat, Methacrylat, Allyloxyethyl, Propylmethacrylat und Butylmethacrylat. Bevorzugte Alkenylreste **R³** sind auch endständige Alkenylreste aufweisende Polyethylenglykole.

Vorzugsweise bedeutet **y1+y2** Werte von 5_{*}(x1+x2+y1+y2)/100 bis 40_{*}(x1+x2+y1+y2)/100, besonders bevorzugt Werte von 10_{*}(x1+x2+y1+y2)/100 bis 30_{*}(x1+x2+y1+y2)/100, insbesondere Werte von 14_{*}(x1+x2+y1+y2)/100 bis 25_{*}(x1+x2+y1+y2)/100.

Die 1,3-Dioxolan Copolymere weisen vorzugsweise ein Molekulargewicht Mw zwischen 750 - 300000, besonders bevorzugt zwischen 1500 - 125000, ganz besonders bevorzugt zwischen 2200 - 63000, insbesondere zwischen 4000 - 25000 auf.

Die 1,3-Dioxolan Copolymere weisen vorzugsweise eine dynamische Viskosität bei 25 °C zwischen 50 mPas - 500 Pas, besonders bevorzugt zwischen 500 mPas - 200 Pas, insbesondere zwischen 700 mPas - 50 Pas auf.

Die 1,3-Dioxolan Copolymere der vorstehenden allgemeinen Formel I sind auf einfache Weise und mit kurzen Reaktionszeiten herstellbar. Herstellungsbedingt können die 1,3-Dioxolan Copolymere der vorstehenden allgemeinen Formel (I) noch mit Anteilen an Copolymeren vermischt sein, bei denen in der allgemeinen Formel (I) der Rest **R³** durch ein Wasserstoffatom ersetzt ist oder das Wasserstoffatom am anderen Ende der 1,3-Dioxolan Copolymeren durch einen Rest **R³** ersetzt ist. Vorzugsweise sind die Copolymere der vorstehenden allgemeinen Formel (I) mit höchstens 5 Mol-%, besonders bevorzugt höchstens 1 Mol-%, insbesondere höchstens 0,1 Mol-% an Copolymeren vermischt, bei denen in der allgemeinen Formel (I) der Rest **R³** durch ein Wasserstoffatom ersetzt ist oder das Wasserstoffatom am anderen Ende der 1,3-Dioxolan Copolymeren durch einen Rest **R³** ersetzt ist.

Gegenstand der Erfindung ist auch ein Verfahren zur Herstellung der 1,3-Dioxolan Copolymere der allgemeinen Formel (I)

H- [O-CH₂-O-CH₂-CH₂-]ₓ₁ [O-CH₂-CH₂O-CH₂-]ₓ₂ [O-CH₂-O-CHR¹-CHR²-]_{y1} [O-CHR¹-CHR²O-CH₂-]_{y2} O**R³** (I),

in der
**x1+x2** Werte von 10 bis 2000 bedeuten,
**R¹** und **R²** Wasserstoffreste oder C₁- bis C₁₈-Alkylrest bedeuten,
wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3_{*}(x1+x2+y1+y2)/100 bis 50_{*}(x1+x2+y1+y2)/100 bedeutet,
**R³** einen unsubstituierten oder durch Halogenatome,
Aminogruppen, C₁₋₆-Alkyl-, C₁₋₆-Alkoxy- oder Silylgruppen substituierten aliphatisch gesättigten oder ungesättigten Kohlenwasserstoffrest mit 1 bis 100 Kohlenstoffatomen bedeutet,
in dem eine oder mehrere, einander nicht benachbarte -CH₂-Einheiten durch Gruppen -O-, -S-, C=O, -O-C(O)-, oder -NR⁴-ersetzt sein können und in denen eine oder mehrere, einander nicht benachbarte =CH-Einheiten durch Gruppen -N= ersetzt sein können und
**R⁴** einen Wasserstoffrest oder C₁- bis C₁₈-Alkylrest bedeutet, bei dem 1,3-Dioxolan mit alkylsubstituiertem 1,3-Dioxolan der allgemeinen Formel II 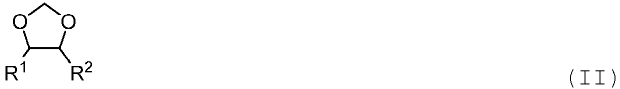
   in Gegenwart einer Lewis- oder Brønstedt-Säure und einem Alkohol der allgemeinen Formel **R³**OH copolymerisiert wird, wobei
   das molare Verhältnis von Lewis- oder Brønstedt-Säure zu Alkohol der allgemeinen Formel **R³**OH kleiner 1 ist.

In der allgemeinen Formel II befinden sich Alkylreste **R¹** und **R²** in 4 und 5 Stellung der 1,3-Dioxolane.

Das Verfahren ist eine ringöffnende Polymerisation der Dioxolan-Monomere durch kationisch induzierte Katalyse. Der Katalysator ist die Lewis- oder Brønstedt-Säure. Der Alkohol **R³**OH hat die Funktion eines Initiators.

Durch dieses Verfahren kann gegenüber klassischen Methoden auf eine nachträgliche Funktionalisierung eines α,ω-hydroxyterminierten Polymers verzichtet werden.

Im Verfahren werden vorzugsweise mindestens 10 Mol-%, besonders bevorzugt mindestens 20 Mol-%, insbesondere mindestens 30 Mol-% an alkylsubstituiertem 1,3-Dioxolan der allgemeinen Formel II, bezogen auf die Gesamtmenge an 1,3-Dioxolan und alkylsubstituiertem 1,3-Dioxolan der allgemeinen Formel II eingesetzt.

Im Verfahren muss mehr an alkylsubstituiertem 1,3-Dioxolan der allgemeinen Formel II eingesetzt werden, da dieses reaktionsträger ist als 1,3-Dioxolan, als rechnerisch notwendig ist um einen bestimmten Anteil an Werten **y1+y2** zu erzielen.

Beispiele für Säuren sind Lewis-Säuren, wie BF₃, AlCl₃, TiCl₃, SnCl₄, SO₃, PCl₅, POCl₃, FeCl₃ und dessen Hydrate und ZnCl₂; Brønstedt-Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluß-, Jodwasserstoff-, Bromwasserstoff-, Perchlor-, Hexafluorophosphorsäure, Aluminiumchlorid, Zinkchlorid, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Zitronen-, Croton-, Ameisen-, Fumar-, Malein-, Malon-, Gallus-, Itacon-, Milch-, Wein-, Oxal-, Phthal- und Bernsteinsäure, saure Ionenaustauscher, saure Zeolithe, säureaktivierte Bleicherde und säureaktivierter Ruß.

Besonders bevorzugt ist Trifluormethansulfonsäure.

Vorzugsweise findet das Verfahren unter Abwesenheit von Wasser statt. Dadurch wird die Entstehung von Copolymeren unterdrückt, bei denen in der allgemeinen Formel (I) der Rest **R³** durch ein Wasserstoffatom ersetzt ist.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Methyl-tert-butylether, Diisopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Die Bezeichnung Lösungsmittel bedeutet nicht, dass sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Besonders bevorzugt wird eine Lösung aus Trifluormethansulfonsäure und dem Initiator eingesetzt, wobei als bevorzugtes Lösungsmittel Methylenchlorid verwendet wird.

Die eingesetzte Menge an Katalysator und Initiator bestimmt das erzielbare Molekulargewicht des 1,3-Dioxolan Copolymers der allgemeinen Formel I.

Der als Initiator eingesetzte Alkohol **R³**OH regelt die angestrebte Kettenlänge der 1,3-Dioxolan Copolymere der allgemeinen Formel (I).

Die Lewis- oder Brønstedt-Säure wird in katalytischen Mengen eingesetzt, um den Initiator zu aktivieren.

Vorzugsweise beträgt das molare Verhältnis von Lewis- oder Brønstedt-Säure zu Alkohol der allgemeinen Formel **R³**OH zwischen 0,5 und 0,001, insbesondere zwischen 0,1 und 0,01.

Vorzugsweise werden pro Mol der Summe aus 1,3-Dioxolan und alkylsubstituiertem 1,3-Dioxolan der allgemeinen Formel II 50 bis 10000 Mol ppm, besonders bevorzugt 100 bis 5000 Mol ppm, insbesondere 200 bis 4000 Mol ppm Lewis- oder Brønstedt-Säure eingesetzt.

Vorzugsweise werden die Lewis- oder Brønstedt-Säure mit dem Alkohol der allgemeinen Formel **R³**OH vermischt, bevor die Mischung zu dem 1,3-Dioxolan und alkylsubstituierten 1,3-Dioxolan der allgemeinen Formel II gegeben wird.

Das Verfahren wird vorzugsweise bei einer Temperatur zwischen 10 und 60 °C, besonders bevorzugt zwischen 15 und 40 °C, insbesondere zwischen 21 und 30 °C durchgeführt. Ganz besonders bevorzugt ist eine Reaktionstemperatur von 23 °C.

Die Aufarbeitung der Reaktion erfolgt bevorzugt durch Inaktivierung des Katalysators mittels einer geeigneten Base, Waschen mit einem Kohlenwasserstoff, wie Heptan und Trocknung bei vermindertem Druck.

Als Base eignet sich bevorzugt Pyridin, Triethylamin oder wässrige Natronlauge.

Die Polyacetale können als Emulgatoren oder als Edukte für die Darstellung funktioneller Siliconöle, oder ähnliche Zwecke eingesetzt werden.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Analytik für die gesamte Erfindung:

NMR-Spektroskopie für die Bestimmung des Anteils an Alkylethylenoxid-Brücken.

Die Messung erfolgt in Lösung in CDCl3 an einem Bruker Avance 500 oder Ascend 500 (500 MHz für 1H-Spektrum). Alle Messungen sind gegen TMS als externen Standard referenziert. Die Bestimmung der relativen Verhältnisse der Monomereinheiten im Polymer erfolgt durch Integration der jeweiligen Signalsätze.

Zudem kann die Kettenlänge und die Molmasse des Polymers durch Integration der Endgruppensignale bestimmt werden.

SEC (Size-Exclusion Chromatography): zur Bestimmung der zahlenmittleren und massenmittleren Molekulargewichte Mn, Mw und der Polydispersität:
Die Messung erfolgt gegen Polystyrol-Standard, in THF, bei 35°C, Flussrate 0,3 ml/min und Detektion mit RID (Brechungsindex-Detektor) auf einer PLgel MiniMIX-C Guard Säule von Agilent mit einem Injektionsvolumen von 20 µl bestimmt.

Rheometer zur Bestimmung der dynamischen Viskosität Die Messung erfolgt an einem Rotations-Viskosimeter MCR 320 der Firma Anton Paar bei 25 °C. Die graphische Auswertung erfolgt durch Auftragung der Viskosität gegen die Schubspannung.

DSC (Differential Scanning Calorimetry/Dynamische Differenz Thermoanalyse) zur Bestimmung des Schmelzpunktes und der Glasübergangstemperatur:
Die Messungen erfolgten an einem DSC-1 Gerät der Firma Mettler Toledo in einem Temperaturbereich von - 150 °C bis 150 °C in zwei Durchläufen mit einer Heiz- bzw. Kühlrate von 10 K, wobei der zweite Lauf zur Bestimmung des Schmelzpunktes und der Glasübergangstemperatur genutzt wurde.

TGA-Analyse zur Bestimmung des Zersetzungbeginns:
Die Ermittlung des Zersetzungsbeginns (Onset) erfolgte an einem TGA-2 Gerät der Firma Mettler Toledo, wobei die Probe mit einer Heizrate von 10 K/min unter Sauerstoffatmosphäre erwärmt wurde.

### Beispiel 1:

Herstellung der Katalysatorlösung: 10 ml trockenes Dichlormethan, 1.9 ml Allyloxyethanol und 76 µl Trifluromethansulfonsäure werden zusammengegeben und für 1h bei Raumtemperatur gerührt. 1,35 ml der zuvor hergestellten Katalysatorlösung werden in einen Kolben gegeben und auf 23 °C temperiert. Anschließend werden 10,12 g (96 mmol) 4-Ethyl-1,3-dioxolan (EDX) und 6,75 ml (96 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet.

### Beispiel 2:

2,7 ml der in Beispiel 1 hergestellten Katalysatorlösung werden in einen Kolben gegeben und auf 23 °C temperiert. Anschließend werden 10,12 g (96 mmol) 4-Ethyl-1,3-dioxolan (EDX) und 6,75 ml (96 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet.

### Beispiel 3:

5,4 ml der in Beispiel 1 hergestellten Katalysatorlösung werden in einen Kolben gegeben und auf 23 °C temperiert. Anschließend werden 10,12 g (96 mmol) 4-Ethyl-1,3-dioxolan (EDX) und 6,75 ml (96 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet

### Beispiel 4:

Herstellung der Katalysatorlösung: 10 ml trockenes Dichlormethan, 5,15 g Methacrylsäurehydroxypropylester und 152 µl Trifluromethansulfonsäure werden zusammengegeben und für 1h bei Raumtemperatur gerührt. 4,05 ml der zuvor hergestellten Katalysatorlösung werden in einen Kolben gegeben und auf 23 °C temperiert. Anschließend werden 15,18 g (144 mmol) 4-Ethyl-1,3-dioxolan (EDX) und 10,12 ml (144 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet.

### Beispiel 5:

Herstellung der Katalysatorlösung: 10 ml trockenes Dichlormethan, 3,34 g 1-Dodecanol und 76 µl Trifluromethansulfonsäure werden zusammengegeben und für 1h bei Raumtemperatur gerührt. 1,35 ml der zuvor hergestellten Katalysatorlösung werden in einen Kolben gegeben und auf 23 °C temperiert. Anschließend werden 10,12 g (96 mmol) 4-Ethyl-1,3-dioxolan (EDX) und 6,75 ml (96 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet.

### Beispiel 6:

Herstellung der Katalysatorlösung: 10 ml trockenes Dichlormethan, 1,05 ml Ethanol und 76 µl Trifluromethansulfonsäure werden zusammengegeben und für 1h bei Raumtemperatur gerührt. 1,35 ml der zuvor hergestellten Katalysatorlösung werden in einen Kolben gegeben und auf 23 °C temperiert. Anschließend werden 10,12 g (96 mmol) 4-Ethyl-1,3-dioxolan (EDX) und 6,75 ml (96 mmol) 1,3-Dioxolan (DXL) zugegeben und gerührt.

Nach 4 h wird solange Pyridin zugegeben bis sich der Ansatz entfärbt. Das Produkt wird mit Heptan und destilliertem Wasser gewaschen und anschließend am Vakuum getrocknet.

### Beispiel 7 (nicht erfindungsgemäß)

1,35 ml der in Beispiel 1 hergestellten Katalysatorlösung werden in einen Kolben gegeben und auf 23 °C temperiert. Anschließend werden 13,5 ml (193 mmol) 1,3-Dioxolan (DXL) zugegeben und gerührt. Der Reaktionsansatz ist nach 10 min nicht mehr rührbar. Es werden 1 ml Pyridin und 10 ml Dichlormethan zur Reaktionslösung gegeben. Anschließend wird der Feststoff in Heptan gefällt, mit destilliertem Wasser gewaschen und am Vakuum getrocknet.

In Tabelle 1 sind die Ergebnisse der Beispiele aufgeführt:

**Tabelle 1:**

| Beispiel | Initiator | Menge Initiator in mol% | M in g/mol (NMR) | Mn in g/mol (SEC) | Mw in g/mol (SEC) | PDI | Viskosität in Pas | Tg in °C |
|---|---|---|---|---|---|---|---|---|
| 1 | Allyloxyethanol | 1,25 | 4120 | 2750 | 6560 | 2,47 | 5,4 | -64 |
| 2 | Allyloxyethanol | 2, 5 | 2810 | 3860 | 6340 | 1,64 | 2,7 | -65 |
| 3 | Allyloxyethanol | 5,0 | 1600 | 1610 | 2700 | 1,67 | 0,87 | -67 |
| 4 | Hydroxybutylmethacrylat | 5, 6 | 1800 | 2010 | 3520 | 1,75 | 1,7 | -62 |
| 5 | Dodecanol | 1,26 | 4980 | 3510 | 6470 | 1,85 | 4,6 | -64 |
| 6 | Ethanol | 1,26 | 4020 | 4020 | 7300 | 1,82 | 7,3 | -63 |
| 7* | Allyloxyethanol | 1,24 | 4800 | 3720 | 9420 | 2,53 | n.b. (Produkt ist fest) | -62 |

| | | | | | | | | |
|---|---|---|---|---|---|---|---|---|
| * nicht erfindungsgemäß | | | | | | | | |

## Patentansprüche

1. 1,3-Dioxolan Copolymere der allgemeinen Formel I
H- [O-CH₂-O-CH₂-CH₂-]ₓ₁ [O-CH₂-CH₂O-CH₂-]ₓ₂ [O-CH₂-O-CHR¹-CHR²-]_{y1} [O-CHR¹-CHR²O-CH₂-]_{y2} O**R³** (I),
in der
**x1+x2** Werte von 10 bis 2000 bedeuten,
**R¹** und **R²** Wasserstoffreste oder C₁- bis C₁₈-Alkylrest bedeuten,
wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3*(x1+x2+y1+y2)/100 bis 50_{*}(x1+x2+y1+y2)/100 bedeutet,
**R³** einen unsubstituierten oder durch Halogenatome,
Aminogruppen, C₁₋₆-Alkyl-, C₁₋₆-Alkoxy- oder Silylgruppen substituierten aliphatisch gesättigten oder ungesättigten Kohlenwasserstoffrest mit 1 bis 100 Kohlenstoffatomen bedeutet, in dem eine oder mehrere, einander nicht benachbarte -CH₂-Einheiten durch Gruppen -O-, -S-, C=O, -O-C(O)-, oder -NR⁴- ersetzt sein können und in denen eine oder mehrere, einander nicht benachbarte =CH-Einheiten durch Gruppen -N= ersetzt sein können und
**R⁴** einen Wasserstoffrest oder C₁- bis C₁₈-Alkylrest bedeutet.

2. 1,3-Dioxolan Copolymere nach Anspruch 1, bei denen die Reste **R¹** und **R²** ausgewählt werden aus Wasserstoffresten, Methyl-, Ethyl-, n-Propyl- oder i-Propylresten.

3. 1,3-Dioxolan Copolymere nach einem der vorstehenden Ansprüche, bei denen jeweils nur ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet.

4. 1,3-Dioxolan Copolymere nach einem der vorstehenden Ansprüche, welche ein Molekulargewicht Mw zwischen 750 - 300000 aufweisen, gemessen gegen Polystyrol-Standard, in THF, bei 35°C, Flussrate 0,3 ml/min und Detektion mit RID (Brechungsindex-Detektor) auf einer PLgel MiniMIX-C Guard Säule von Agilent mit einem Injektionsvolumen von 20 µl.

5. 1,3-Dioxolan Copolymere nach einem der vorstehenden Ansprüche, welche eine dynamische Viskosität bei 25 °C zwischen 50 mPas - 500 Pas aufweisen, gemessen an einem Rotations-Viskosimeter MCR 320 der Firma Anton Paar bei 25 °C, wobei die graphische Auswertung durch Auftragung der Viskosität gegen die Schubspannung erfolgt.

6. 1,3-Dioxolan Copolymere nach einem der vorstehenden Ansprüche, wobei **R³** einen Alkylrest mit 1 bis 18 Kohlenstoffatomen bedeutet.

7. 1,3-Dioxolan Copolymere nach einem der vorstehenden Ansprüche, wobei **R³** Alkenylrest mit 2 bis 10 Kohlenstoffatomen bedeutet, in dem eine oder mehrere, einander nicht benachbarte -CH₂-Einheiten durch Gruppen -O- oder -O-C(O)- ersetzt sein können.

8. Verfahren zur Herstellung von 1,3-Dioxolan Copolymeren der allgemeinen Formel I
H- [O-CH₂-O-CH₂-CH₂-]ₓ₁ [O-CH₂-CH₂O-CH₂-]ₓ₂ [O-CH₂-O-CHR¹-CHR²-]_{y1} [O-CHR¹-CHR²O-CH₂-]_{y2} O**R³** (I),
in der
**x1+x2** Werte von 10 bis 2000 bedeuten,
**R¹** und **R²** Wasserstoffreste oder C₁- bis C₁₈-Alkylrest bedeuten,
wobei jeweils mindestens ein Rest **R¹** oder **R²** in den Einheiten [O-CH₂-O-CHR¹-CHR²-]_{y1} und [O-CHR¹-CHR²O-CH₂-]_{y2} einen C₁- bis C₁₈-Alkylrest bedeutet,
mit der Maßgabe, dass **y1+y2** Werte von 3*(x1+x2+y1+y2)/100 bis 50_{*}(x1+x2+y1+y2)/100 bedeutet,
**R³** einen unsubstituierten oder durch Halogenatome,
Aminogruppen, C₁₋₆-Alkyl-, C₁₋₆-Alkoxy- oder Silylgruppen substituierten aliphatisch gesättigten oder ungesättigten Kohlenwasserstoffrest mit 1 bis 100 Kohlenstoffatomen bedeutet, in dem eine oder mehrere, einander nicht benachbarte -CH₂-Einheiten durch Gruppen -O-, -S-, C=O, -O-C(O)-, oder -NR⁴- ersetzt sein können und in denen eine oder mehrere, einander nicht benachbarte =CH-Einheiten durch Gruppen -N= ersetzt sein können und
**R⁴** einen Wasserstoffrest oder C₁- bis C₁₈-Alkylrest bedeutet, bei dem 1,3-Dioxolan mit alkylsubstituiertem 1,3-Dioxolan der allgemeinen Formel II 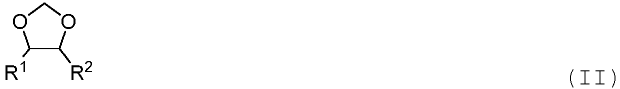
in Gegenwart einer Lewis- oder Brønstedt-Säure und einem Alkohol der allgemeinen Formel **R³**OH copolymerisiert wird,
wobei das molare Verhältnis von Lewis- oder Brønstedt-Säure zu Alkohol der allgemeinen Formel **R³**OH kleiner 1 ist.

9. Verfahren nach Anspruch 8, bei dem die Säure Trifluormethansulfonsäure ist.

10. Verfahren nach Anspruch 8 oder 9, bei dem pro Mol der Summe aus 1,3-Dioxolan und alkylsubstituiertem 1,3-Dioxolan der allgemeinen Formel II 50 bis 10000 Mol ppm Lewis- oder Brønstedt-Säure eingesetzt werden.

11. Verfahren nach einem der Ansprüche 8 bis 10, bei dem die Temperatur zwischen 10 und 60 °C beträgt.

## Claims

1. 1,3-Dioxolane copolymers of the general formula I
H- [O-CH₂-O-CH₂-CH₂-]ₓ₁ [O-CH₂-CH₂O-CH₂-]ₓ₂ [O-CH₂-O-CHR¹-CHR²- ]_{y1} [O-CHR¹-CHR²O-CH₂-]_{y2} OR³ (I),
in which
x1+x2 has values of 10 to 2000,
R¹ and R² are hydrogen radicals or C₁ to C₁₈ alkyl radical,
where in each case at least one radical R¹ or R² in the units [O-CH₂-O-CHR¹-CHR²- ]_{y1} and [O-CHR¹-CHR²O-CH₂-]_{y2} is a C₁ to C₁₈ alkyl radical,
with the proviso that y1+y2 has values of 3_{*}(x1+x2+y1+y2)/100 to 50_{*}(x1+x2+y1+y2)/100,
R³ is an aliphatically saturated or unsaturated hydrocarbon radical which is unsubstituted or substituted by halogen atoms, amino groups, C₁₋₆ alkyl, C₁₋₆ alkoxy or silyl groups and has 1 to 100 carbon atoms, in which one or more mutually non-adjacent -CH₂ units may be replaced by -O-, -S-, C=O, -O-C(O)- or -NR⁴- groups and in which one or more mutually non-adjacent =CH units may be replaced by -N= groups and
R⁴ is a hydrogen radical or C₁ to C₁₈ alkyl radical.

2. 1,3-Dioxolane copolymers according to Claim 1, in which the radicals R¹ and R² are selected from hydrogen radicals or methyl, ethyl, n-propyl or i-propyl radicals.

3. 1,3-Dioxolane copolymers according to either of the preceding claims, in which in each case only one radical R¹ or R² in the units [O-CH₂-O-CHR¹-CHR²-]_{y1} and [O-CHR¹-CHR²O-CH₂-]_{y2} is a C₁ to C₁₈ alkyl radical.

4. 1,3-Dioxolane copolymers according to any of the preceding claims, which have a molecular weight Mw of between 750 - 300 000, measured against a polystyrene standard, in THF, at 35°C, flow rate 0.3 ml/min and detection with RID (refractive index detector) on an Agilent PLgel MiniMIX-C Guard column with an injection volume of 20 µl.

5. 1,3-Dioxolane copolymers according to any of the preceding claims, which have a dynamic viscosity at 25°C of between 50 mPas - 500 Pas, measured on an Anton Paar MCR 320 rotational viscometer at 25°C, where the graphical evaluation is performed by plotting viscosity against shear stress.

6. 1,3-Dioxolane copolymers according to any of the preceding claims, where R³ is an alkyl radical having 1 to 18 carbon atoms.

7. 1,3-Dioxolane copolymers according to any of the preceding claims, where R³ is an alkenyl radical having 2 to 10 carbon atoms, in which one or more mutually non-adjacent -CH₂ units may be replaced by -O- or -O-C(O)-groups.

8. Process for producing 1,3-dioxolane copolymers of the general formula I
H- [O-CH₂-O-CH₂-CH₂-]ₓ₁ [O-CH₂-CH₂O-CH₂-]ₓ₂ [O-CH₂-O-CHR¹-CHR²-]_{y1} [O-CHR¹-CHR²O-CH₂-]_{y2} OR³ (I),
in which
x1+x2 has values of 10 to 2000,
R¹ and R² are hydrogen radicals or C₁ to C₁₈ alkyl radical,
where in each case at least one radical R¹ or R² in the units [O-CH₂-O-CHR¹-CHR²-]_{y1} and [O-CHR¹-CHR²O-CH₂-]_{y2} is a C₁ to C₁₈ alkyl radical,
with the proviso that y1+y2 has values of 3_{*}(x1+x2+y1+y2)/100 to 50_{*}(x1+x2+y1+y2)/100,
R³ is an aliphatically saturated or unsaturated hydrocarbon radical which is unsubstituted or substituted by halogen atoms, amino groups, C₁₋₆ alkyl, C₁₋₆ alkoxy or silyl groups and has 1 to 100 carbon atoms, in which one or more mutually non-adjacent -CH₂ units may be replaced by -O-, -S-, C=O, -O-C(O)- or -NR⁴- groups and in which one or more mutually non-adjacent =CH units may be replaced by -N= groups and
R⁴ is a hydrogen radical or C₁ to C₁₈ alkyl radical,
in which process 1,3-dioxolane is copolymerized with alkyl-substituted 1,3-dioxolane of the general formula II 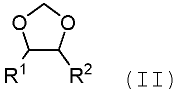
in the presence of a Lewis or Brønsted acid and an alcohol of the general formula R³OH, where the molar ratio of Lewis or Brønsted acid to alcohol of the general formula R³OH is less than 1.

9. Process according to Claim 8, in which the acid is trifluoromethanesulfonic acid.

10. Process according to Claim 8 or 9, in which 50 to 10 000 mol ppm of Lewis or Brønsted acid is used per mol of the sum total of 1,3-dioxolane and alkyl-substituted 1,3-dioxolane of the general formula II.

11. Process according to any of Claims 8 to 10, in which the temperature is between 10°C and 60°C.

## Revendications

1. Copolymères de 1,3-dioxolane de formule générale I
H-[(O-CH₂-O-CH₂-CH₂-)ₓ₁ (O-CH₂-CH₂-O-CH₂-)ₓ₂ [O-CH₂-O-CHR¹-CHR²-]_{y1} [O-CHR¹-CHR²O-CH₂-]_{y2} O**R³** (I),
dans laquelle
**x1+x2** représentent des valeurs de 10 à 2 000,
**R¹** et **R²** représentent des radicaux hydrogène ou un radical alkyle en C₁ à C₁₈, au moins un radical R¹ ou R² dans chacune des unités [O-CH₂-O-CHR¹-CHR²-]_{y1} et [O-CHR¹-CHR² O-CH₂-]_{y2} représentant un radical alkyle en C₁ à C₁₈,
étant entendu que **y1+y2** représente des valeurs de 3* (x1+x2+y1+y2)/100 à 50* (x1+x2+y1+y2)/100,
**R³** représente un radical hydrocarboné aliphatique saturé ou insaturé, ayant de 1 à 100 atomes de carbone, non substitué ou substitué par des atomes d'halogène, des groupes amino, des groupes alkyle en C₁₋₆, alcoxy en C₁₋₆ ou silyle, dans lequel une ou plusieurs unités -CH₂- non contiguës peuvent être remplacées par des groupes -O-, - S-, C=O, -O-C(O)-, ou -NR⁴- et dans lequel une ou plusieurs unités =CH- non contiguës peuvent être remplacées par des groupes -N= et
**R⁴** représente un atome d'hydrogène ou un radical alkyle en C₁ à C₁₈.

2. Copolymères de 1,3-dioxolane selon la revendication 1, dans lesquels les radicaux R¹ et R² sont choisis parmi des radicaux hydrogène, des radicaux méthyle, éthyle, n-propyle ou isopropyle.

3. Copolymères de 1,3-dioxolane selon l'une quelconque des revendications précédentes, dans lesquels un seul radical R¹ ou R² dans chacune des unités [O-CH₂-O-CHR¹-CHR²-]_{y1} et [O-CHR¹-CHR²O-CH₂-]_{y2} représente un radical alkyle en C₁ à C₁₈.

4. Copolymères de 1,3-dioxolane selon l'une quelconque des revendications précédentes, qui présentent une masse moléculaire Mw comprise entre 750 et 300 000, mesurée contre un étalon de polystyrène, dans du THF, à 35 °C, à un débit de 0,3 ml/min et détection avec RID (détecteur d'indice de réfraction) sur une colonne PLgel MiniMIX-C Guard d'Agilent avec un volume d'injection de 20 µl.

5. Copolymères de 1,3-dioxolane selon l'une quelconque des revendications précédentes, qui présentent une viscosité dynamique à 25 °C comprise entre 50 mPa.s et 500 mPa.s, mesurée sur un viscosimètre rotatif MCR 320 de la société Anton Paar à 25 °C, l'évaluation graphique s'effectuant en portant la viscosité en fonction de la contrainte de cisaillement.

6. Copolymères de 1,3-dioxolane selon l'une quelconque des revendications précédentes, dans lesquels R³ représente un radical alkyle ayant de 1 à 18 atomes de carbone.

7. Copolymères de 1,3-dioxolane selon l'une quelconque des revendications précédentes, dans lesquels R³ représente un radical alcényle ayant de 2 à 10 atomes de carbone, dans lequel une ou plusieurs unités -CH₂- non contiguës peuvent être remplacées par des groupes -O- ou -O-C(O)-.

8. Procédé pour la préparation de copolymères de 1,3-dioxolane de formule générale I
H-[(O-CH₂-O-CH₂-CH₂-)ₓ₁ (O-CH₂-CH₂-O-CH₂-)ₓ₂ [O-CH₂-O-CHR¹-CHR²-]_{y1} [O-CHR¹-CHR²O-CH₂-]_{y2} OR3 (I),
dans laquelle
**x1+x2** représentent des valeurs de 10 à 2 000,
**R¹** et **R²** représentent des radicaux hydrogène ou un radical alkyle en C₁ à C₁₈, au moins un radical R¹ ou R² dans chacune des unités [O-CH₂-O-CHR¹-CHR²-]_{y1} et [O-CHR¹-CHR² O-CH₂-]_{y2} représentant un radical alkyle en C₁ à C₁₈,
étant entendu que **y1+y2** représente des valeurs de 3* (x1+x2+y1+y2)/100 à 50* (x1+x2+y1+y2)/100,
**R³** représente un radical hydrocarboné aliphatique saturé ou insaturé, ayant de 1 à 100 atomes de carbone, non substitué ou substitué par des atomes d'halogène, des groupes amino, des groupes alkyle en C₁₋₆, alcoxy en C₁₋₆ ou silyle, dans lequel une ou plusieurs unités -CH₂- non contiguës peuvent être remplacées par des groupes -O-, - S-, C=O, -O-C(O)-, ou -NR⁴- et dans lequel une ou plusieurs unités =CH- non contiguës peuvent être remplacées par des groupes -N= et
**R⁴** représente un atome d'hydrogène ou un radical alkyle en C₁ à C₁₈.
dans lequel du 1,3-dioxolane est copolymérisé avec du 1,3-dioxolane substitué par alkyle, de formule générale II 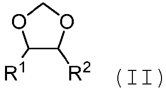
en présence d'un acide de Lewis ou de Brønstedt et d'un alcool de formule générale R³OH, le rapport molaire d'acide de Lewis ou de Brønstedt à alcool de formule générale R³OH étant inférieur à 1.

9. Procédé selon la revendication 8, dans lequel l'acide est l'acide trifluorométhanesulfonique.

10. Procédé selon la revendication 8 ou 9, dans lequel 50 à 10 000 ppm en moles d'acide de Lewis ou de Brønstedt sont utilisées par mole de la somme de 1,3-dioxolane et 1,3-dioxolane substitué par alkyle.

11. Procédé selon l'une quelconque des revendications 8 à 10, dans lequel la température est comprise entre 10 et 60 °C.
